# EUROPEAN PATENT APPLICATION

(11) **EP 4 610 880 A1**
(43) Date of publication of application: **03.09.2025**
(21) Application number: 24160327.3
(22) Date of filing: 28.02.2024
(51) Int. Cl.: G06N 3/045, G06N 3/048, G06N 5/022, G06N 7/01

(54) **AUTOMATICALLY EXTRACTING AND EVALUATING KNOWLEDGE FROM DISTRIBUTED DATA SILOS**

(71) Applicant: Siemens Aktiengesellschaft, 80333 München (DE)
(72) Inventor: Himmelhuber, Anna, 80339 München (DE); Lamparter, Steffen, 85622 Feldkirchen (DE); Rachny, Thomas, 92348 Richtheim (DE); Schneider, Klaus-Peter, 85622 Feldkirchen (DE); Thamm, Florian, 90762 Fürth (DE); Zechel, Markus, 83278 Traunstein (DE); Lohse, Oliver, 85614 Kirchseeon (DE)
(74) Representative: Siemens Patent Attorneys

(57) **Abstract**

System and computer-implemented method for automatically extracting and evaluating knowledge from distributed data silos (90, 91, 92) regarding a product manufactured in a production plant, comprising:
- receiving (S1), by a data interface (81), data of at least two different data silos (90, 91, 92) comprising data of different dimensions with respect to the product, wherein at least one data silo (90, 91, 92) comprises a bill of materials of the product,
- assigning (S2), by a data integration function (82), the data of all data silos (90, 91, 92) to an intelligence graph (10), comprising nodes and edges connecting two nodes, wherein each data point of the data is assigned to one node, and each edge denotes a relationship between the interconnected nodes,
- identifying (S3), by a graph processing function (83) receiving as input the intelligence graph (10), a subgraph (30, 40, 50, 60) depending on a task related to the product, wherein the subgraph (30, 40, 50, 60) comprises information according to the task, and
- outputting (S4), by a user interface (84), the information and/or the subgraph (30, 40, 50, 60) according to the task.

## Description

### Field of the Invention

The present invention relates to a computer-implemented method for automatically extracting knowledge from distributed data silos regarding a product manufactured in a plant. The invention further refers to a corresponding apparatus and computer program product.

### Background

Product development and optimization is a complex process that requires careful consideration of a multitude of factors, including availability of parts and resources, cost, sustainability, and current situational dynamics, such as pandemics or international conflicts. The ability to adapt and respond to these changing circumstances while maintaining an efficient and resilient value chain is key to maintaining market competitiveness.

To facilitate the process of product development and optimization, a variety of specialized tools are available. These tools provide domain professionals with in-depth insights into potential characteristics of the product. However, the information required for a holistic perspective is often scattered across several data silos, with no direct connection between them. Optimizing a product in one expert tool is not synchronized with another tool, potentially leading to discrepancies or misinterpretations. Furthermore, compatibility between data formats and structures across different data silos and tools is not guaranteed.

Thus, there is a need to extract knowledge from distributed data silos regarding a product and its production process to facilitate development and optimization of the product and its manufacturing process.

### Brief Summary of the Invention

This object is solved by the features of the independent claims. The dependent claims contain further embodiment of the invention.

A first aspect concerns a computer-implemented method for automatically extracting knowledge from distributed data silos regarding a product manufactured in a plant, comprising the following steps:
Receiving, by a data interface, data of at least two different data silos comprising data of different dimensions with respect to the product, wherein at least one data silo comprises a bill of materials of the product.
Assigning, by a data integration function, the data of all data silos to an intelligence graph, comprising nodes and edges connecting two nodes, wherein each data point of the data is assigned to one node, and each edge denotes a relationship between the interconnected nodes.
Identifying, by a graph processing function receiving as input the intelligence graph, a subgraph depending on a task related to the product, wherein the subgraph comprises information according to the task, and
   outputting, by a user interface, the information and/or the subgraph according to the task.

Advantageously, the intelligence graph allows harmonizing and connecting several dimensions and data silos for increased transparency and better decision making of the user.

The data silo denotes a system or subsystem in which data is not adequately shared but rather remains sequestered within each system or subsystem, figuratively trapped within a container like grain is trapped within a silo. Data silos occur whenever a data system is incompatible or not integrated with other data systems. Data of a data silo denotes a set of data points which are contained in a data silo.

The dimensions denote topics of interest or characteristics of the product, especially with respect to product development and product optimization. An intelligence graph is a knowledge graph comprising information related to the product. The knowledge graph is a knowledge base that uses a graph-structured data model or topology to represent and operate on data.

Advantageously, the method provides relationships between data points represented by edges, effectively connecting and unifying disparate data silos. The intelligence graph allows for the simultaneous consideration of multiple dimensions, which is crucial for a comprehensive analysis of complex data sets especially related to the product.

In an advantageous embodiment each node having a node type out of a set of node types, each node type indicating a different aspect of the product.

The node types provide a pre-classification of the data to yield an aspect related structure of the data from the different data silos.

In an advantageous embodiment each node having a node type out of a set of node types, each node type indicating a different aspect of the product.

The method integrates information of the product to yield a more reliable risk estimate.

In an advantageous embodiment the node type is one of
- a dimension node, indicating a topic of interest related to product optimization,
- a part node, indicating information on a part of the product according to a bill of materials,
- a manufacturing node, indicating a manufacturing process, a machine or a labour performed in the manufacturing process or related to the product, and/or
- a supplementary node, indicating further information related to the product.

The different node types provide a clear structure of the intelligence graph focussing on data having major influence on the product development, manufacturing process with respect to parts and components. The influence may be directed to wear, availability, CO2 emission of a product or parts of it and many more.

In an advantageous embodiment the edge represents one of
- a hierarchy of the parts according to the bill of materials,
- a sequence of different manufacturing processes,
- a dependency of the node to at least one dimension, and/or
- an alternative of parts used for a product.

Advantageously, the edge provides a relation between the interconnected nodes and reflects the specific relations for a specific product. This enables a focussed analysis of the composition of the product or manufacturing process which is efficient due to the focussing possibilities and due to efficient processing of intelligence graph by Al based tools/functions like Graph neural networks.

In an advantageous embodiment the graph processing function is a filtering function.

Performed on the intelligence graph, the filtering function provides specific information in a comprehensive and processing effective way.

In an advantageous embodiment the graph processing function is an optimization function.

An optimization function can be either implemented by an analytical function, e.g., by Lagrange optimization, or by a data-based function, e.g., graph neural network. Optimization functions provide an efficient tool to evaluate various variants of a product or manufacturing process optimized onto different aspects, e.g., related to different dimensions represented by dimension nodes in the intelligence graph.

In an advantageous embodiment the graph processing function is an Al based model. Preferably, the graph processing function is at least one of a graph neural network, a graph deep learning model performing the task of at least one of a classification, an anomaly detection, a link prediction, an optimization.

By integrating the data extracted from different data silos into the intelligence graph, a manifold of AI based functions can be applied onto the data and provide solutions for a wide spectrum of tasks. Besides that, the mentioned Al-based functions are efficient with respect to processing power.

In an advantageous embodiment the task is providing transparency with respect to different dimensions of product variants, wherein the substructure of the intelligence graph is output comprising information related to the parts of the product variants and a value of the dimension assigned to the respective product variants.

In an advantageous embodiment the task is creating product variants by predicting alternative edges between nodes providing alternative parts of the product and/or the task is creating manufacturing process variants by predicting alternative edges between nodes providing alternative manufacturing steps of the product.

In an advantageous embodiment the task is explaining individual predictions using a graph neural network explainer.

The graph processing function not only performs predictions, e.g., with respect to a specific task, but also can explain why the specific prediction was output.

A second aspect concerns a System for automatically extracting knowledge from distributed data silos regarding a product manufactured in a production plant, comprising at least one processor, configured for
- receiving, by a data interface, data of at least two different data silos comprising data of different dimensions with respect to the product, wherein at least one data silo comprises a bill of materials of the product,
- assigning, by a data integration function, the data of all data silos to an intelligence graph, comprising nodes and edges connecting two nodes, wherein each data point of the data is assigned to one node, and each edge denotes a relationship between the interconnected nodes,
- identifying, by a graph processing function receiving as input the intelligence graph, a subgraph depending on a task related to the product, wherein the subgraph comprises information according to the task, and
- outputting, by a user interface, the information and/or the subgraph according to the task.

The system creates an Al-compatible data representation comprising data of different data silos that significantly enhances the training process of machine learning models.

A third aspect concerns a computer program comprising program instructions that cause, when the program is executed by a computer, the computer to carry out a method as described above.

A fourth aspect concerns a computer program product directly loadable into the internal memory of at least one digital computer, comprising software code portions for performing the steps of the method as described above.

### Brief description of the drawings

The invention will be explained in more detail by reference to accompanying figures. Similar objects will be marked by the same reference signs. The figures are provided to illustrate example embodiments described herein and are not intended to limit the scope of the disclosure.
- Figure 1: schematically illustrates an embodiment of the inventive computer-implemented method as a flow diagram.
- Figure 2: schematically illustrates an embodiment of an intelligence graph comprising data of different data silos.
- Figure 3: schematically illustrates a first embodiment of a subgraph resulting from a transparency use case.
- Figure 4: schematically illustrates a second embodiment of a subgraph resulting from a transparency use case.
- Figure 5: schematically illustrates an embodiment of a subgraph depicting all manufacturing processes and process chains for producing the product.
- Figure 6: schematically illustrates an embodiment of a subgraph resulting from the task to assess cost and ecofactors for two variants of the product.
- Figure 7: schematically illustrates an embodiment of a subgraph resulting from the task potential alternative parts for the product.
- Figure 8: schematically illustrates an embodiment of the inventive system.

It is noted that in the following detailed description of embodiments, the accompanying drawings are only schematic, and the illustrated elements are not necessarily shown to scale. Rather, the drawings are intended to illustrate functions and the co-operation of functions or components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection.

Functional units or modules can be implemented by dedicated hardware, e.g., processor, firmware or by software, and/or by a combination of dedicated hardware and firmware and software. It is further noted that each module and functional unit described for an apparatus can perform a functional step of the related method and vice versa.

The numeration of the steps in the methods are meant to ease their description. They do not necessarily imply a certain ordering of the steps. In particular, several steps may be performed concurrently.

### Technical Problem

Developing new products, optimizing existing products as well as optimizing manufacturing processes requires a multifaceted approach in order to fulfil the requirements of the market. More than ever, not only cost but also environmental aspects of a product play a fundamental role in product development and manufacturing. Products or manufacturing processes which are exclusively optimized to cost or individual sustainability categories risk falling into the trap of local optima. Therefore, it is essential to adopt a holistic perspective across the most important aspects - such as cost, sustainability, and consumer willingness to pay - throughout the product lifecycle.

In extraordinary situations, such as the ongoing COVID-19 pandemic or escalating international conflicts, additional factors need to be considered. These situational dynamics can significantly influence both market conditions and the entire value chain, necessitating a more adaptive and responsive approach to product development and optimization. For instance, international conflicts may disrupt supply chains, affect resource availability, or alter trade regulations, which in turn require strategic adjustments in product development and the overall value chain management.

However, information required for a holistic perspective is often scattered across different tools accessing data from several data silos, with no direct connection between them. Furthermore, compatibility between data formats and structures across different data silos is not guaranteed. Thus, the development of product variants becomes laborious and time-consuming as the data model for various topics of interest first needs to be determined. The tools are tailored to specific domains, like product development, manufacturing process engineering, supply chain management, and further, leading to potential incompatibilities.

Thus, following challenges are identified:
Information required to model a product, i.e., its components as provided in a bill of materials, short BOM, with respect to certain dimensions like environmental impact, costs, value, is dispersed across several data silos. The relationship between various components is unclear, as the BOMs may differ due to varied focuses across data silos. Extending the model of a product with a new dimension is tedious and cumbersome. Modelling of product variants and versions is costly in terms of both resources and time.

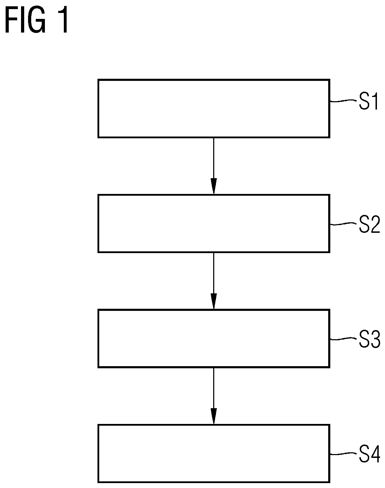

The proposed method automatically extracts knowledge from distributed data silos regarding a product manufactured in a plant and integrates the information into an intelligence graph, which enables evaluating the product and its manufacturing process with respect to several topics of interest, synonymously called dimensions. Based on Fig.1 single steps of the methods are explained.

In a first step S1 data of at least two different data silos are receiving by a data interface comprising data of different dimensions of the product. At least one of the different data silos comprises a bill of materials of the product. Optionally, a data preprocessing step is included aligning data from the different data silos regarding data format, filling in supplemented data points and further.

The data of all data silos are assigned to an intelligence graph by a data integration function, see step S2. The intelligence graph comprises nodes and edges, each edge interconnecting two nodes. Each data point of the data is assigned to one node, and each edge denotes a relationship between the interconnected nodes.

A subgraph depending on a task related to the product is identified in step S3 by a graph processing function. The graph processing function receives as input the intelligence graph and outputs the subgraph, which comprises information according to the task. In step S4 the information and/or the subgraph according to the task is output by a user interface.

The intelligence graph provides an ontology and a respective knowledge graph that harmonizes and connects several dimensions and data silos for increased transparency and better decision making of the user. The dimensions incorporated are e.g. ecological factors and costs in regard to manufacturing a product.

Each node of the intelligence graph has a node type out of a set of node types, wherein each node type indicates a different aspect of the product. Node types are at least one of a dimension node, a part node, a manufacturing node, a supplementary node and optionally further.

The dimension node indicates a topic of interest related to product optimization. Dimensions are for example ecological factors, value, costs, risk etc. depending on the lifecycle phases of the product. The part node indicates information on a part of the product according to a bill of materials, which includes a complete list of components of the product. For instance, detailed information such as part numbers are assigned to part nodes. The manufacturing node indicates a manufacturing process, a machine or a labour performed in the manufacturing process of the product or of a part of the product. The supplementary node indicates further information related to the product. Examples of such information denotes a country of origin, a specification of a part or material of a part or a supplier or the part of the product.

The edges of the intelligence graph represent one of a hierarchy of the parts according to the bill of materials, a sequence of different manufacturing processes and hierarchies, e.g., geographical locations of manufacturing. Further on, an edge represents a dependency of the node to at least one dimension node. If there are alternative parts that can be used for a product, the alternative parts are also linked to the original part via an edge.

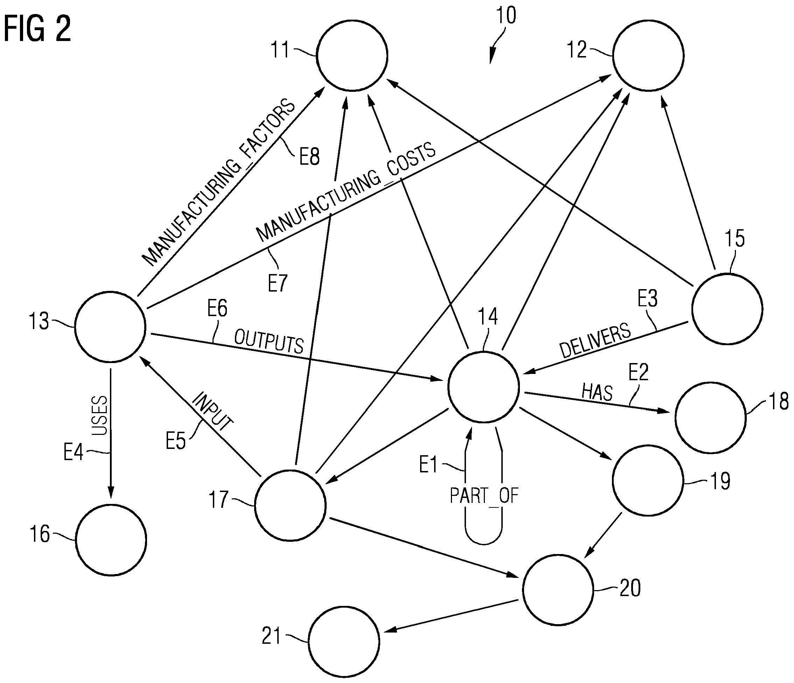

An embodiment of an intelligence graph 10 for a product is depicted in Fig.2. As an example, the intelligence graph 10 is populated by data from different data silos, e.g., a first data silo containing the bill of materials with information on parts contained in the product, a second data silo containing information on supplier of materials and a third data silo containing information on the manufacturing process of the product.

Data points of the first data silo are assigned to a parts node, e.g., node 14, wherein a hierarchy of part nodes is established by connecting a first part node with a second part node with an edge E1 denoting that the second part is contained in the first part. In Fig. 2 only a single part node 14 is depicted representing the first part node and second part node. A specification of the part assigned to part node 14 is assigned to a supplementary node 18 and connected by an edge E2.

The assignment of the data points to the node types is be performed automatically, e.g., depending on the structure of the data in the data silo.

Thus, further information like, a location of a parts warehouse is assigned to a supplementary node 19, which itself can be further specified by supplementary nodes providing country 20 and area 21 of the location of the parts warehouse represented by node 19 and interconnected by an edge representing a "located in" relation.

Data points are received from the second data silo containing suppliers of parts. The different suppliers are assigned to respective "supplier" nodes 15 and automatically connected to the delivered part of part node 14 by an edge E3 representing the relation "delivers". Similarly, data from the third data silo containing information on a manufacturing process of a product is received and integrated into the intelligence graph 10. Thus, a data point on a manufacturing process of a specific part is assigned to a manufacturing node 13 and connected to the part 14 by edge E6 denoting "outputs" which is produced in the manufacturing process. Further data points received from the third data silo are received and interconnected by edges representing the relation between the nodes. E.g., a machine is assigned to a supplementary node 16 and connected by edge E4 denoting "uses" with node 13 denoting the manufacturing process. A data point on raw material is assigned to node 16 and connected by edge E5 denoting "input to" to node 13 of the manufacturing process.

Topics of interest in product development and/or in optimizing the manufacturing are assigned to dimension nodes, e.g., "ecofactors" like CO2 emission, recycling capability, and further is assigned to node 11 and "costs" are assigned to node 12. All nodes which are related to costs are connected by a respective edge to each of the dimension nodes 11, 12. For instance node 13 representing the manufacturing process is connected by edges E7 representing manufacturing factors to node 11 and by edge E8 representing manufacturing costs to node 12.

Edges between two nodes can be determined without specific information of the specific data silos by link prediction performed applying a graph neural network which is trained on the intelligence graph 10 or intelligence graphs for similar products.

Thus, the resulting intelligence graph integrates and interrelates data of the different data silos and enables an evaluation of the product under diverse aspects.

The intelligence graph 10 can be used for different tasks, e.g., providing transparency with respect to different dimensions of product variants. The substructure of the intelligence graph is output comprising information related to the parts of the product variants and a value of the dimension assigned to the respective product variants. Another task is creating product variants by predicting alternative edges between nodes providing alternative parts of the product. Another task is creating manufacturing process variants by predicting alternative edges between nodes providing alternative manufacturing steps of the product. A further task is explaining individual predictions using a graph neural network explainer.

The intelligence graph is input into graph processing functions determined according to the task which has to be fulfilled. The graph processing function is for instance a filtering function, an analytic optimization function or an AI based model. the graph processing function is at least one of a graph neural network, a graph deep learning model performing the task of at least one of a classification, an anomaly detection, a link prediction, an optimization.

Examples for transparency related tasks are calculating the dimensions of targeted variants / products and show how they compare with each other. The applied graph processing function is a query of data related to the specified variants and/or applying a graph neural network to determine missing links required to determine all relevant data. Further, the task to be solved is to determine an optimal variant based on one or more dimensions. Here dimensions could be "sustainability" provided by minimal wear or optimal predictive maintenance to enlarge lifecycle of the product. Another task is to evaluate a change in dimensions when replacing single processes or components or parts etc.

Another transparency related task is to evaluate a Product Life Cycle (PLC) with the dimensions spread over the phases Make, Use and End of Life or to provide metainformation of the product or manufacturing process based on countries, origin of specific entities, time component of costs and its change over time.

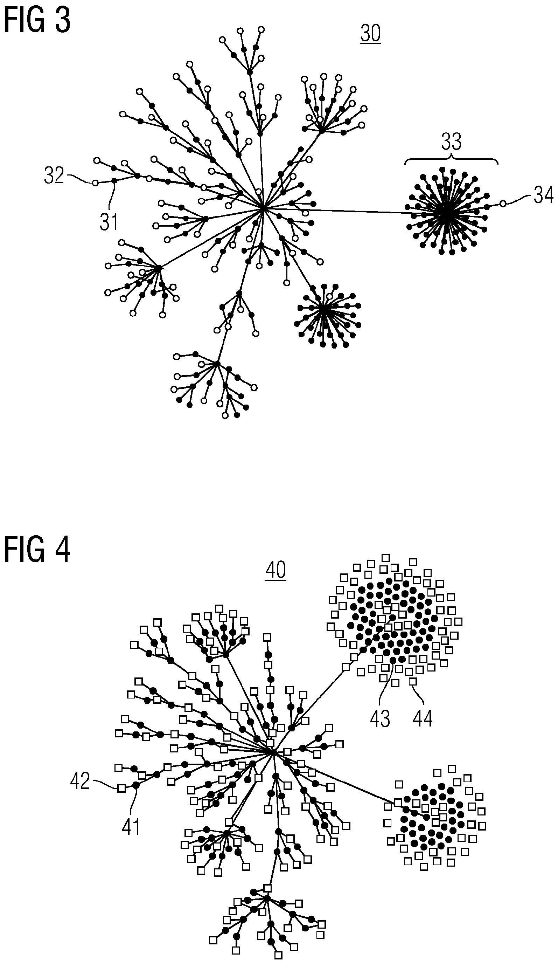

Examples for substructures being output by the graph processing function processing the intelligence graph as input are shown in Fig. 3 to Fig.6.

Fig.3 shows a subgraph 30 which provides an answer to the task on what are the total costs for a product, here exemplary the cost of an electrical vehicle charger. The subgraph 30 shows each part node 31 which makes up the product and the cost node 32 assigned to the part node 31. The subgraph 30 shows also a substructure of the charger. E.g., a component 33 of the changer is made up of a group of parts, but only one cost node 34 is assigned to the several parts. The edges between two part nodes indicate an hierarchy of the parts. The total costs can be summed up over the individual parts and part groups.

Fig.4 shows subgraph 50 which provides the information with respect to the task about what is the total CO2 emission generated for producing the charger. The subgraph 40 comprises for each single part 41, 43 the connected CO2 emission node 42, 44.

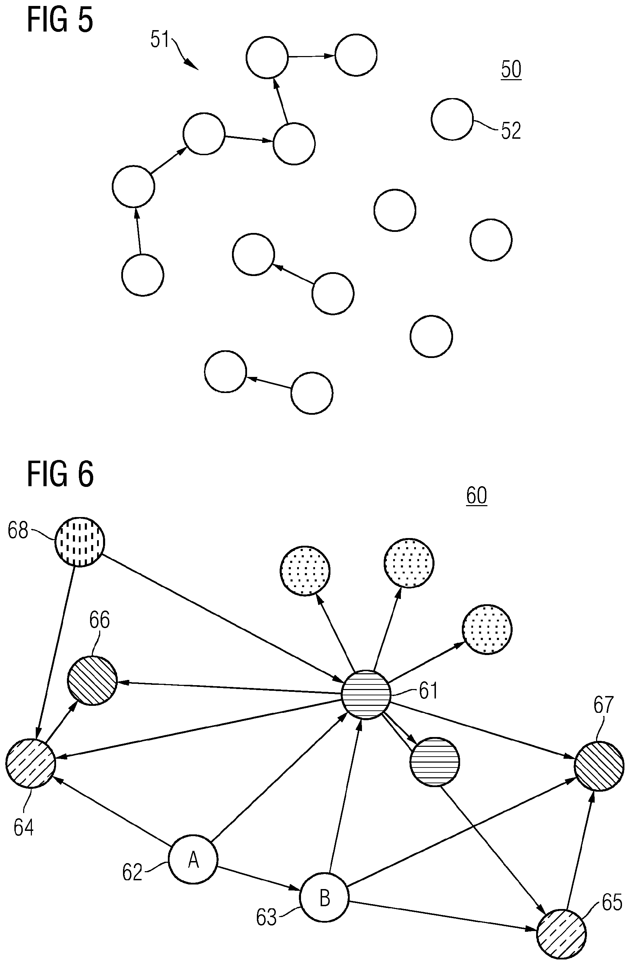

Fig. 5 shows a subgraph 50 consisting of all manufacturing nodes 52 assigned to manufacturing processes associated with a product. Processes which make up a sequence of process are connected by edges, see process 51. The subgraph 50 shows the different manufacturing processes associated with a product and their sequence.

Fig. 6 shows subgraph 60 providing the result to the task of assessing the impact of manufacturing a specific part of the product by plastic material B instead of plastic material A. In the intelligence graph the edges of the plastic material B towards the nodes related to the specific part are at least partly not existing. These missing edges are determined by a link prediction function which receives the intelligence graph as input and outputs a subgraph including a prediction for the missing links. Values with respect to cost, required manufacturing processes or tools, resulting ecofactors are provided as "metadata" of the nodes. Alternatively, the task can be performed by a graph neural network applying a similarity search.

In resulting subgraph 60 the specific part is represented by part node 61, material A is represented by supplementary node 62, material B is represented by supplementary node 63. Node 64 represents the cost when the part 61 is made of material A. For better readability the nodes are denoted by the datapoint which is assigned to it. Subgraph 60 reveals that the costs 64 for part 61 comprises not only the raw material costs of material A 62 but also costs for scrap 68. Ecofactor 66, e.g., CO2 emission related to using material A is provided and linked to the costs 66. The cost 65 and ecofactor 67 of part 61 when made of material B 63 is provided respectively. Thus, different dimensions, here cost and ecofactor can be jointly evaluated and illustrated.

Further example questions can be answered by evaluating the intelligence graph. What is the greenest variant having lowest CO2 emissions? What is the reddest variant, i.e., resulting in lowest costs? Which commodity (classification of part) uses how much percent of total CO2 usage? Which part uses how much percent of total CO2 usage? Which region is the raw material from? Which product lifecycle phase has the highest CO2 usage? How does changing a part impact CO2 usage in make and in use phase? How does changing material A impact costs over the time of 5 years?

The intelligence graph enables by its structure and its input to tools predictions and assessing further questions related to the product and its manufacturing process. Such Al-based tools are a graph neural network, a graph deep learning model performing the task of at least one of a classification, an anomaly detection, a link prediction, or an optimization.

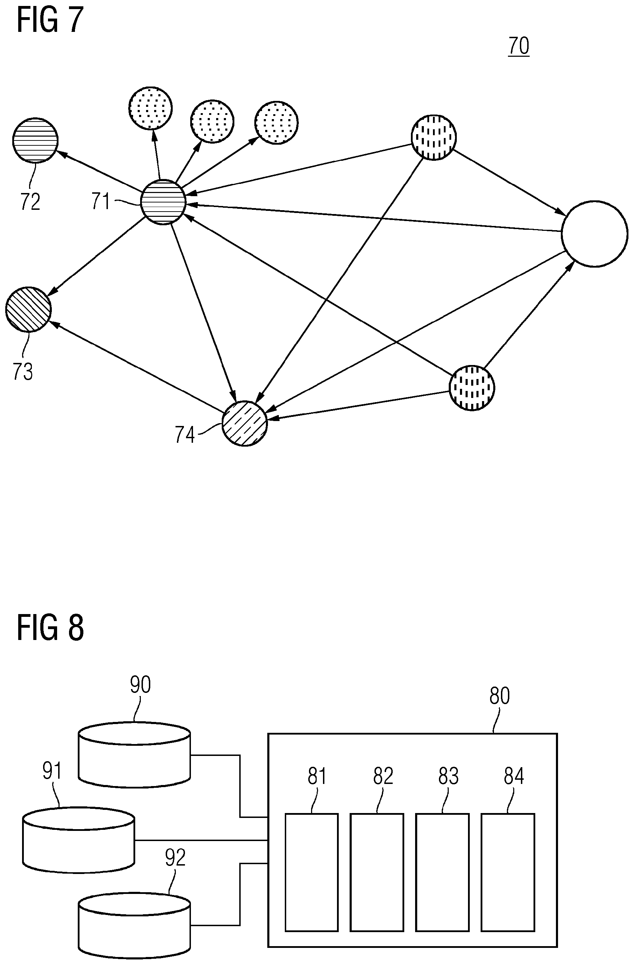

Fig. 7 shows a subgraph 70 of the intelligence graph which shows an actual part 71 of the product. Based on the intelligence graph, further alternatives to substitute part 71 can be determined by link prediction as described above. Along with the link prediction, the respective dimensions ecofactors 73 and costs 74 are provided for the user to see the implications of the alternative.

Based on the intelligence graph, it is possible to further be assessed which alternative parts would lead to a lower CO2 footprint and lower costs.

Fig. 8 illustrates an embodiment of a respective system 80 for automatically extracting and evaluating knowledge from several distributed data silos 90, 91, 92 regarding a product manufactured in a production plant. The system 80 comprises of at least one processor configured to perform the functional steps of the described computer-implemented method. In more detail, the system 80 comprises a data interface 81, a data integration function 82, a graph processing function 83 and a user interface 84.

The data interface 81 is configured to receive data of at least two different data silos 90, 91, 92 comprising data of different dimensions with respect to the product. At least one of the data silos comprises a bill of materials of the product. In an embodiment the data interface 81 comprises data preprocessing modules performing data format conversion, data padding, and further functions to align the data from the different data silos 90, 91, 92 to a common structure.

The data integration function 82 is configured to assign the data of all data silos 90, 91, 92 to an intelligence graph. The intelligence graph comprises nodes and edges connecting two nodes, wherein each data point of the data is assigned to one node. Each edge denotes a relationship between the interconnected nodes.

The graph processing function 83 is configured to receive as input the intelligence graph and to output a subgraph depending on a task related to the product. The subgraph comprises information according to the task. The graph processing function 83 is configured to perform a graph neural network explainer, which provides human comprehensible explanations for predictions provided by Al-based tools.

The user interface 84 is configured to output the information and/or the subgraph according to the task. The user interface 84 is configured to receive the task from a user. In an embodiment the user interface 84 is a graphical user interface comprising a display to output the subgraph.

In an embodiment the graph processing function 83 and user interface 84 form a recommender system which uses the intelligence graph generated by the data integration function as knowledge base. The graph processing function 83 implements various data evaluation functions, e.g., querying and optimization functions and/or Al-based functions like a graph neural network or a graph deep learning model. These Al-based functions perform, e.g., link prediction, anomaly detection, classification, optimization and furthermore.

In the proposed system, relationships between data points are represented by edges, effectively connecting, and unifying disparate data silos. This interconnected structure, i.e., the intelligence graph, allows for the simultaneous consideration of multiple dimensions, which is crucial for a comprehensive analysis of complex data sets. Without the intelligence graph, individual tools modelling the corresponding aspects/dimensions were handled by domain experts, and the modelling of product variants and multi-dimensional optimization was achieved through collaboration between these experts. This manual process required the alignment, interpretation, and communication of all items within the bill of materials BOM, resulting in a time-consuming and labour-intensive effort. With the introduction of the intelligence graph's structure, the system streamlines manifold aspects in the data revealing new and unexpected relationships and ultimately improving overall efficiency in handling complex data sets.

By employing this approach, the system 80 creates an Al-compatible data representation that significantly enhances the training process of machine learning models. This is particularly beneficial for graph neural networks, which thrive on connected data and are designed to handle graph-based structures. Consequently, the data representation and organization in the intelligence graph 10 allows graph neural networks to uncover hidden patterns and relationships within the data that may have been otherwise overlooked. Graph neural networks perform these tasks very efficiently in terms of processing capacity.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for automatically extracting and evaluating knowledge from distributed data silos (90, 91, 92) regarding a product manufactured in a production plant, comprising
- receiving (S1), by a data interface (81), data of at least two different data silos (90, 91, 92) comprising data of different dimensions with respect to the product, wherein at least one data silo (90, 91, 92) comprises a bill of materials of the product,
- assigning (S2), by a data integration function (82), the data of all data silos (90, 91, 92) to an intelligence graph (10), comprising nodes and edges connecting two nodes, wherein each data point of the data is assigned to one node, and each edge denotes a relationship between the interconnected nodes,
- identifying (S3), by a graph processing function (83) receiving as input the intelligence graph (10), a subgraph (30, 40, 50, 60) depending on a task related to the product, wherein the subgraph (30, 40, 50, 60) comprises information according to the task, and
- outputting (S4), by a user interface (84), the information and/or the subgraph (30, 40, 50, 60) according to the task.

2. Computer-implemented method according to claim 1, wherein each node having a node type out of a set of node types, each node type indicating a different aspect of the product.

3. Computer-implemented method according to claim 2, wherein the node type is one of
- a dimension node, indicating a topic of interest related to product optimization,
- a part node, indicating information on a part of the product according to the bill of materials,
- a manufacturing node, indicating a manufacturing process, a machine or a labour performed in the manufacturing process or related to the product, and/or
- a supplementary node, indicating further information related to the product.

4. Computer-implemented method according to any of the preceding claims, wherein the edge represents one of
- a hierarchy of the parts according to the bill of materials,
- a sequence of different manufacturing processes,
- a dependency of the node to at least one dimension, and/or
- an alternative of parts used for the product.

5. Computer-implemented method according to any of the preceding claims, wherein the graph processing function comprises a filtering function.

6. Computer-implemented method according to any of the preceding claims, wherein the graph processing function comprises an optimization function.

7. Computer-implemented method according to any of the preceding claims, wherein the graph processing function comprises an AI based model.

8. Computer-implemented method according to claim 7, wherein the graph processing function comprises at least one of a graph neural network, a graph deep learning model performing the task of at least one of a classification, an anomaly detection, a link prediction, an optimization.

9. Computer-implemented method according to any of the preceding claims, wherein the task is providing transparency with respect to different dimensions of product variants, wherein the substructure of the intelligence graph (10) is output comprising information related to the parts of the product variants and a value of the dimension assigned to the respective product variants.

10. Computer-implemented method according to any of claims 7-8, wherein the task is creating product variants by predicting alternative edges between nodes providing alternative parts of the product and/or the task is creating manufacturing process variants by predicting alternative edges between nodes providing alternative manufacturing steps of the product.

11. Computer-implemented method according to any of claims 6-10, wherein the task is explaining individual predictions using a graph neural network explainer.

12. System for automatically extracting and evaluating knowledge from distributed data silos (90, 91, 92) regarding a product manufactured in a production plant, comprising at least one processor, configured for
- receiving (S1), by a data interface (81), data of at least two different data silos (90, 91, 92) comprising data of different dimensions with respect to the product, wherein at least one data silo (90, 91, 92) comprises a bill of materials of the product,
- assigning (S2), by a data integration function (82), the data of all data silos (90, 91, 92) to an intelligence graph (10), comprising nodes and edges connecting two nodes, wherein each data point of the data is assigned to one node, and each edge denotes a relationship between the interconnected nodes,
- identifying (S3), by a graph processing function (83) receiving as input the intelligence graph (10), a subgraph (30, 40, 50, 60) depending on a task related to the product, wherein the subgraph (30, 40, 50, 60) comprises information according to the task, and
- outputting (S4), by a user interface (84), the information and/or the subgraph (30, 40, 50, 60) according to the task.

13. Computer program comprising program instructions that cause, when the program is executed by a computer, the computer to carry out a method according to any of the previous claims 1-11.

14. A computer program product directly loadable into the in-ternal memory of at least one digital computer, comprising software code portions for performing the steps of claims 1-11 when said product is run on said at least one digital computer.
